# EUROPEAN PATENT APPLICATION

(11) **EP 3 537 372 A1**
(43) Date of publication of application: **11.09.2019**
(21) Application number: 19161767.9
(22) Date of filing: 08.03.2019
(51) Int. Cl.: G06Q 50/30, G06Q 20/02

(54) **MULTIMODAL TRANSPORTATION SERVICES PLATFORM**

(30) Priority: 09.03.2018 US 201815917170
(71) Applicant: Ford Global Technologies, LLC, Dearborn, MI 48126-2738 (US)
(72) Inventor: AICH, Sudipto, Dearborn, MI 48126 (US)
(74) Representative: Haseltine Lake Kempner LLP

(57) **Abstract**

A multi-modal transportation system detects presence of a user passing through a multimodal transportation system. User presence may be detected from transaction information, detection of a card or other tag, detection of a the user's mobile device by active or passive beacons, Wi-Fi usage, or other sources. Speed and continued presence of the mobile device in a vehicle may be evaluated to determine usage of a transportation mode. Electronic payment from a user may be invoked based on detected usage. Usage of multiple modes may be combined to define a journey of the user. Transportation usage may also be collected and used by administrators of the multimodal transportation system.

## Description

### BACKGROUND

### FIELD OF THE INVENTION

This invention relates to public transportation vehicles and other systems for supporting public transportation.

### BACKGROUND OF THE INVENTION

City planners, leaders, providers of public transportation, and those who build and maintain traffic infrastructure all have an interest in promoting the safety, efficiency, and quality of transportation within a metropolitan area. However, these parties are often insular and interaction and coordination is often cumbersome or nonexistent.

The systems and methods disclosed provide an ecosystem of service offerings, city infrastructure, technology partners, implementation providers, and standards to provide city solutions that improve safety, efficiency, accessibility, and affordability.

### SUMMARY

A universal application on a mobile device interacts with beacons throughout multiple modes of transportation. The application may report detections of beacons to a server system or transmit signals to beacons that then interact with the server system. Rides on a mode of transportation may be detected based on interactions with the beacons and may be verified based on speed of the mobile device during rides. Billing for rides may be managed in cooperation with a transportation platform having access to user profile and payment information.

### BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the invention will be described and explained with additional specificity and detail through use of the accompanying drawings, in which:
Fig. 1 is a schematic block diagram of a system for implementing a transportation platform in accordance with an embodiment of the present invention;
Fig. 2 is a schematic block diagram of a computer system that may be used to implement the systems and methods disclosed herein;
Fig. 3 is a schematic diagram illustrating use of a transportation operating system in accordance with an embodiment of the present invention;
Fig. 4 is a schematic block diagram of a multi-modal transportation system interacting with a transportation platform in accordance with an embodiment of the present invention;
Fig. 5 is a process flow diagram of a method for processing a multi-model trip in accordance with an embodiment of the present invention;
Fig. 6 is a process flow diagram of a method for verifying a ride in accordance with an embodiment of the present invention; and
Fig. 7 is a process flow diagram of a method for determining a passenger journey including multiple transportation modes in accordance with an embodiment of the present invention.

### DETAILED DESCRIPTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that can contain, store, communicate, propagate, or transport the program for use by or in connection with the instruction execution system, apparatus, or device.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on a computer system as a stand-alone software package, on a stand-alone hardware unit, partly on a remote computer spaced some distance from the computer, or entirely on a remote computer or server. In the latter scenario, the remote computer may be connected to the computer through any type of network, including a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a non-transitory computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

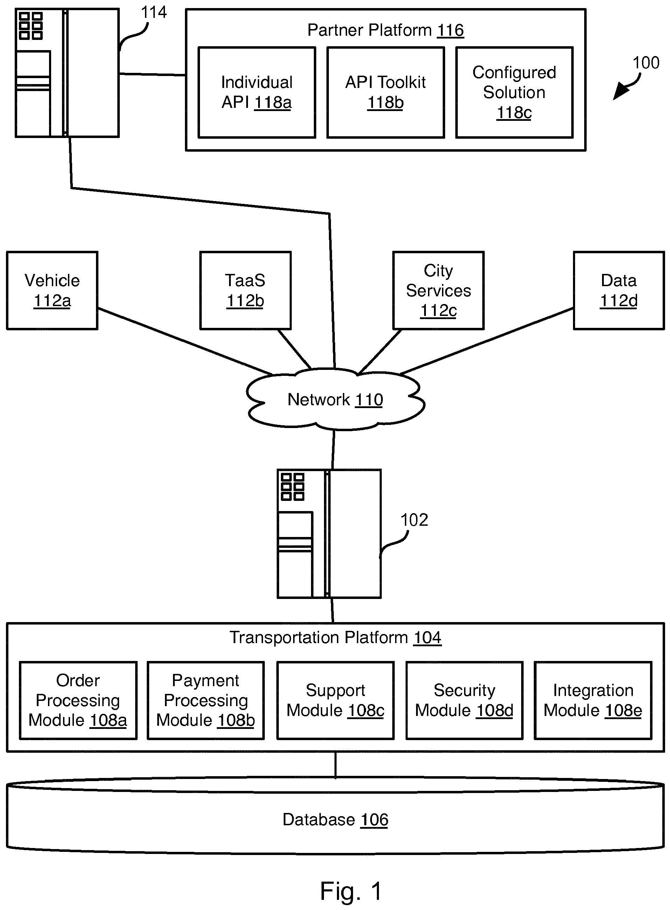

Referring to Fig. 1, an environment 100 may include one or more server systems 102 implementing a transportation platform 104. The transportation platform 104 provides an array of services for use by various transportation related objects and entities such as vehicles, city traffic equipment, city infrastructure, public transportation systems, taxis, buildings, and the like.

The transportation platform may collect data in a transportation database 106 and use this data for various analytical functions. For example, data relating to individual trips and usage of owner-operated vehicles, public transportation vehicles, and taxis may be stored in the transportation database 106 and used to analyze traffic patterns. Data regarding the operation of city traffic equipment, city infrastructure, buildings, and the like may also be stored in the transportation database 106.

The transportation database 106 collects a large amount of data and may be implemented and used according to any "big data" architecture known in the art, such as Hadoop, MapReduce, or any other approach known in the art.

The transportation platform 104 may implement various basic services that can be used by any of the transportation entities. For example, an order processing module 108a may enable the selection of a product or service and enable scheduling of the delivery of the product or provision of the service.

The payment processing module 108b enables the processing of payments from one party and the crediting of some or all of the payments to another party. For example, the payment processing module 108b may manage authentication of parties, secure communication among parties, and electronic processing of payments.

The support module 108c may provide one or more other services to support functioning of the transportation entities. For example, geography tracking, map data, navigation data, routing services, scheduling services, or the like.

The security module 108d may manage authenticated communication between entities and the transportation platform 104 and may also manage authentication of individual passengers. For example, the security module 108d may manage user accounts, authentication with user accounts, and encrypted communication between entities and passengers and between entities and the transportation platform 104.

The integration module 108e may manage communication among the transportation entities to facilitate the seamless provision of services among the transportation entities.

The server system 102 may be coupled to a network 110 that is in data communication with various transportation entities such as an individual vehicle 112a that is owner operated and/or operating as a taxi or limo service. The network 110 may also be coupled to a server and/or vehicles of an entity 112b implementing transportation as a service (TaaS). The network 110 may be coupled to one or more city services 112c such as a public transportation system (bus, train, subway, light rail, high speed rail, etc.) or traffic control systems (traffic light, inductive loop detection systems, traffic control circuits, etc.). City services 112c may also include computer systems of one or more emergency services (police, fire, ambulance), road maintenance services, or any other department of a city government.

The network 110 may also be coupled to one or more sources 112d of data. This data may include weather data, map data, traffic monitoring data, social media data, vehicle manufacturer data, or any other type of data that may be relevant to transportation.

As described in greater detail below, one or more transportation entities may implement or use a partner platform 116. The partner platform 116 may be executed by one of the server system 102 or by a server system 114 of an entity and coupled to the server system 102 by means of a network 110. The partner platform 116 may be implemented as a "widget" that is implemented according to an API (application programming interface) and services exposed by the transportation platform. For example, the partner platform 116 may be implemented as an application using the API and/or services.

As described in the example below, the partner platform 116 may operate in cooperation with a partner application on the mobile device of a passenger or other individual. For example, the partner platform 116 may implement one or more of individual API 118a, API toolkit 118b, and configured solution 118c that may be exposed to another partner platform 116 or be accessed by an application executing on a mobile device.

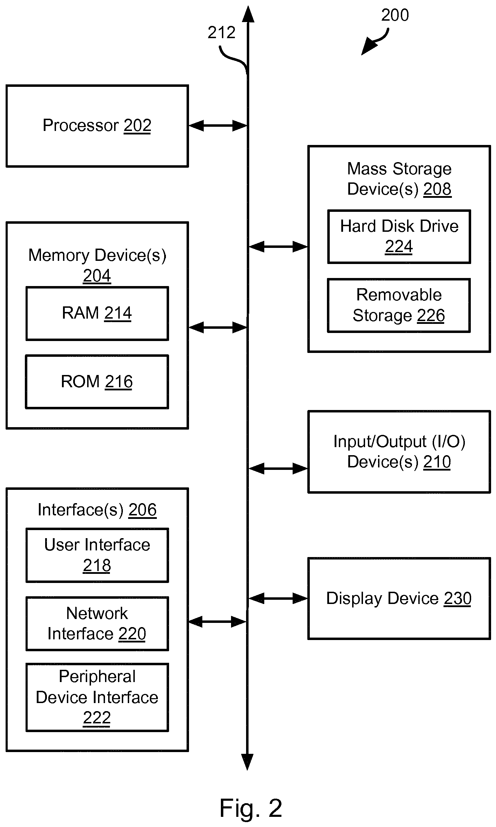

Fig. 2 is a block diagram illustrating an example computing device 200. Computing device 200 may be used to perform various procedures, such as those discussed herein. The server system 102, partner server system 114, vehicle, mobile device, or any of the transportation entities referred to herein may include a computing device having some or all of the attributes of the computing device 200.

Computing device 200 includes one or more processor(s) 202, one or more memory device(s) 204, one or more interface(s) 206, one or more mass storage device(s) 208, one or more Input/Output (I/O) device(s) 210, and a display device 230 all of which are coupled to a bus 212. Processor(s) 202 include one or more processors or controllers that execute instructions stored in memory device(s) 204 and/or mass storage device(s) 208. Processor(s) 202 may also include various types of computer-readable media, such as cache memory.

Memory device(s) 204 include various computer-readable media, such as volatile memory (e.g., random access memory (RAM) 214) and/or nonvolatile memory (e.g., read-only memory (ROM) 216). Memory device(s) 204 may also include rewritable ROM, such as Flash memory.

Mass storage device(s) 208 include various computer readable media, such as magnetic tapes, magnetic disks, optical disks, solid-state memory (e.g., Flash memory), and so forth. As shown in Fig. 2, a particular mass storage device is a hard disk drive 224. Various drives may also be included in mass storage device(s) 208 to enable reading from and/or writing to the various computer readable media. Mass storage device(s) 208 include removable media 226 and/or non-removable media.

I/O device(s) 210 include various devices that allow data and/or other information to be input to or retrieved from computing device 200. Example I/O device(s) 210 include cursor control devices, keyboards, keypads, microphones, monitors or other display devices, speakers, network interface cards, modems, lenses, CCDs or other image capture devices, and the like.

Display device 230 includes any type of device capable of displaying information to one or more users of computing device 200. Examples of display device 230 include a monitor, display terminal, video projection device, and the like.

Interface(s) 206 include various interfaces that allow computing device 200 to interact with other systems, devices, or computing environments. Example interface(s) 206 include any number of different network interfaces 220, such as interfaces to local area networks (LANs), wide area networks (WANs), wireless networks, and the Internet. Other interface(s) include user interface 218 and peripheral device interface 222. The interface(s) 206 may also include one or more peripheral interfaces such as interfaces for pointing devices (mice, track pad, etc.), keyboards, and the like.

Bus 212 allows processor(s) 202, memory device(s) 204, interface(s) 206, mass storage device(s) 208, I/O device(s) 210, and display device 230 to communicate with one another, as well as other devices or components coupled to bus 212. Bus 212 represents one or more of several types of bus structures, such as a system bus, PCI bus, IEEE 1394 bus, USB bus, and so forth.

For purposes of illustration, programs and other executable program components are shown herein as discrete blocks, although it is understood that such programs and components may reside at various times in different storage components of computing device 200, and are executed by processor(s) 202. Alternatively, the systems and procedures described herein can be implemented in hardware, or a combination of hardware, software, and/or firmware. For example, one or more application specific integrated circuits (ASICs) can be programmed to carry out one or more of the systems and procedures described herein.

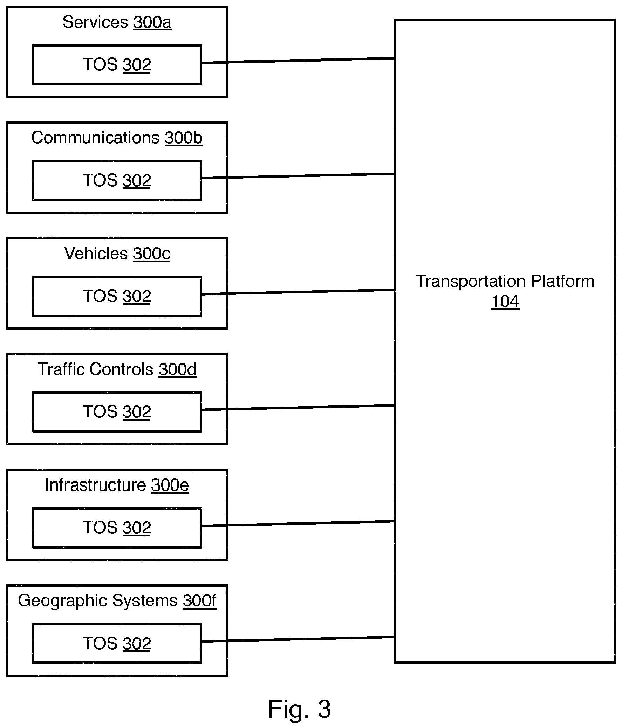

Referring to Fig. 3, the transportation platform 104 may interact with city services 300a, communication systems 300b, vehicles 300c, traffic controls 300d, infrastructure 300e (e.g., buildings), and other geographically distributed systems 300f. In particular, some or all of these systems may execute instances of a transportation operating system (TOS) 302 that implements interfaces to the various modules 108a-108e of the transportation platform 104. The TOS 302 may represent data in a consistent way across the various services 300a-300f and also implement common libraries of functions and data objects. In this manner, coordination among these services 300a-300f may be facilitated by way of the transportation platform 104 or directly among the services 300a-300f.

The TOS 302 may facilitate implementation of an ecosystem of service offerings, city infrastructure, technology partners, implementation providers, and standards to provide city solutions that improve safety, efficiency, accessibility, and affordability. The TOS 302 in combination with the transportation platform 104 may be used to provide a broad set of solutions designed to benefit the city as a partner. In particular, best-in-class partners operating together across problem areas may coordinate and communicate using the TOS 302 and transportation platform 104.

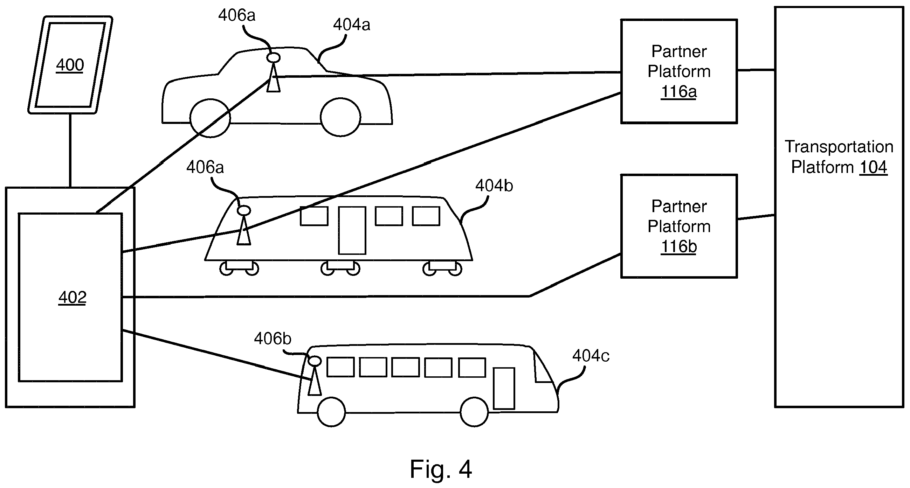

For example, the TOS 302 and transportation platform 104 may implement compliance-focused solutions in transportation in order to increase efficiency, better curb management, multi-modal journey planning (see Figs. 4-6 and corresponding description), and dynamic routing (e.g. manage routing with respect to traffic lights, construction, and emergency services).

In another example, the TOS 302 and transportation platform 104 may coordinate a first mile service along with public transportation for commuters. In this manner, the accessibility of public transportation may be extended further into communities. This may also be used by corporations that need to arrange corporation for representatives and associates in cities. Examples, of services that may implement the TOS 302 to improve efficiency include CIVIC SMART and CLOUD PARC that implement curb management; TRANSLOC, UBER, and other ride-hailing and multi-modal trip-planning services; CHARIOT, which provides first mile commuting service; and LUUM, which provides transportation for corporations in cities;

In another example, safety is improved through the use of the TOS 302 and the transportation platform 104 by using cameras and sensor packages (OEM or after market) in vehicles. These systems may be used to gather and share information regarding dangerous road conditions and pedestrians. This information may be shared with the TOS 302 of other vehicles to enhance safety and pedestrian awareness. Examples, of services that may implement the TOS 302 to enhance safety include PEARL, which provides aftermarket camera and sensor packages; and FLIR, which provides road monitoring for dangerous conditions.

In another example, affordability is improved through the use of the TOS 302 and the transportation platform 104. As outlined below with respect to Figs. 4-6, the TOS 302 and transportation platform 104 may be used to consolidate payment options for multiple modes of transportation. This may be used to reduce cash dependence and improve passenger convenience. Examples of entities that perform payment processing include APPLE PAY, MASTERCARD, VISA, OYSTER, and SQUARE.

Fig. 4 illustrates an example use of the transportation platform 104 in combination with one or more partner platforms 116a, 116b to implement a seamless multi-modal transportation system. In the illustrated example, the mobile device 400 of a passenger executes one or more partner applications 402 programmed to interface with the partner platforms 116a, 116a or directly with the transportation platform 104.

In the illustrated example, various modes of transportation are contemplated such as a taxi 404a or limo 404a, a train 404b, and a bus 404c. Other modes of transportation may be included such as a bike share bicycle, subway, commuter plane, or the like.

The vehicles 404a-404c may have beacons 406a-406b mounted thereto. The beacons 406a-406b may include active beacons 406a. For example, beacons 406a receive a signal from the mobile device 400, such as signals invoked by the application 402 or emitted by the mobile device 400 spontaneously. In some embodiments, the beacons 406a may also transmit signals. For example, the mobile device 400 may broadcast a signal to one of the beacons 406a in response to detecting a signal from the beacon 406a. The beacons 406a then report receipt of the signal from the mobile device 400 to a corresponding partner platform 116a, which then coordinates with the transportation platform 104 to process payment or perform other functions.

The beacons 406a-406b may include passive beacons 406b that do more than repeatedly broadcast a coded signal identifying the beacon and possibly a current time. For example, beacon 406b may be a passive beacon that transmits a signal detected by the mobile device 400. In response, the application 402 reports this fact to the corresponding partner platform 116b, which then coordinates with the transportation platform 104 to process payment or perform other functions. Alternatively, the application 402 may interact directly with the transportation platform.

In the illustrated example, beacons 406a-406b are mounted within the vehicles 404a-404c. However, in some embodiments, beacons 406a-406b may also be mounted within other structures. Such as at entry and/or exit points to a train station, airport terminal, or other transportation facility.

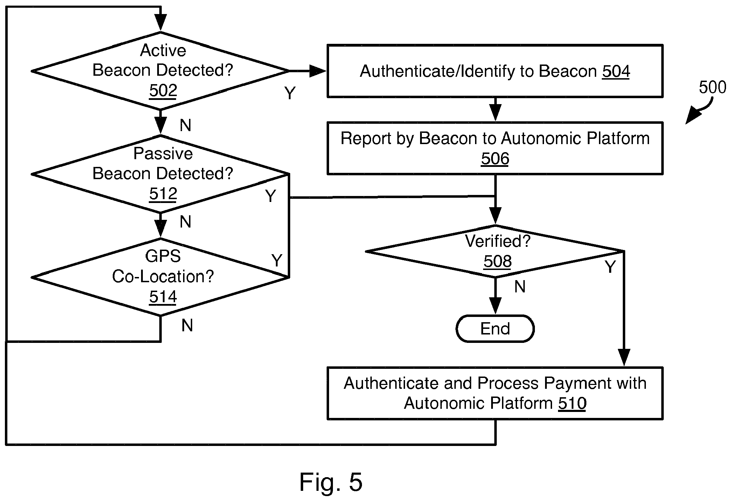

Fig. 5 illustrates a method 500 for processing payments in the multimodal transport system of Fig. 4. The method 500 may include evaluating 502 whether an active beacon 406a has been detected by the mobile device 400. Step 502 may include detecting the beacon 406a using the application 402 on the mobile device implicated by the beacon. For example, the signal from the active beacon 406a may identify the application or the mobile device 400 may be programmed to invoke the application 402 in response to coded information in the signal. The application may then identify 504 the passenger and/or authenticate the passenger with the beacon 406a. This may include transmitting a user identifier and a password or other authentication credential to the beacon 406a over a secure connection.

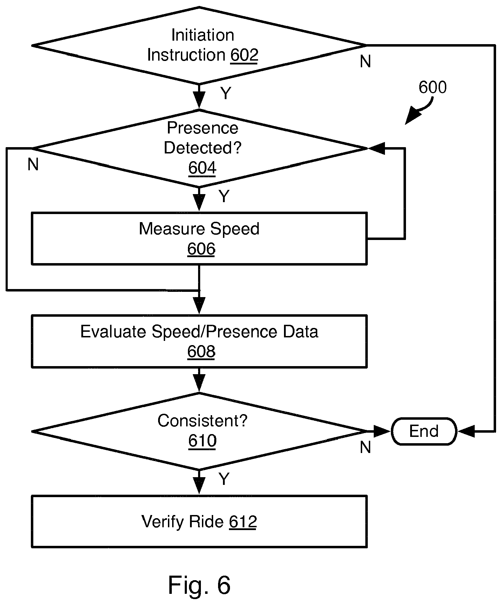

The beacon may then report 506 the identity of the passenger to a partner platform 116a, 116b corresponding to the beacon 406a or directly to the transportation platform 104. The corresponding partner platform 116a, 116b, transportation platform 104, or the mobile device 400 itself may then evaluate 508 whether the passenger has actually taken a ride on the vehicle housing the beacon 406a or other mode of transportation corresponding to the facility housing the beacon 406a. Step 508 may include executing the method 600 of Fig. 6. If the ride is verified 508, then the corresponding partner platform 116a, 116b may then authenticate 510 with the transportation platform 104 and process payment. Alternatively, the transportation platform 104 may process payment directly in cooperation with the mobile device 400 or independently.

For example, authentication information may be passed from the application 402 on the mobile device 400 to the corresponding partner platform 116a, 116b, which then uses this authentication information to authenticate with respect to the passenger. Once authenticated, the corresponding partner platform 116a, 116b may then process payment. This may include debiting an account of the passenger with the transportation platform 104, processing a credit card payment, or verifying that a subscription of the passenger (e.g. a monthly subscription) is current and paid for.

In some embodiments, the method 500 may include storing tracking information regarding the route traveled by the passenger. This information may be used to determine usage patterns of the multimodal transportation system. In some embodiments where payment is not required, the method 500 may still be used to gather information for diagnostic purposes.

In some embodiments, the transportation platform may implement other functions based on rides detected according to the methods described herein such as awarding points for rides taken. In some embodiments, incentives may be provided for the passenger to plan ahead. Accordingly, if the passenger inputs or pays for a journey in advance involving one or more rides on one or more transportation modes, an account of the passenger may be assigned awards, such as points that may be redeemed for free travel or other tangible rewards. This would allow the transportation system to have advance notice of surges in usage of the transportation system, e.g. on weekends or due to special events.

The method 500 may include evaluating 512, by the mobile device 400, whether a passive beacon 406b has been detected. This may include receiving a signal broadcast over BLUETOOTH LOW ENERGY (BLE) or other short range wireless communication protocol. Step 512 may further include deciding an identifier and possibly other information form the signal. For example, the signal may encode a location of the beacon 406b, identify the vehicle in which the beacon is mounted, include a current time, or encode other information.

In response to detecting 512 the signal, the mobile device 400 may invoke the application 402. For example, the identifier included in the signal may be interpreted by the mobile device 400 as corresponding to the application 402 and the mobile device 400 may be programmed to pass information from the signal to the application 402.

In response, the application 402 may report detection of the signal to the corresponding partner platform 116a, 116b, i.e. a partner platform 116a, 116b indicated by information encoded in the signal. For example, the application 402 may be authenticated with respect to the corresponding partner platform 116a, 116b and be programmed to report detected signals to the corresponding partner platform 116a, 116b. Alternatively, the application 402 may report detection of the signal directly to the transportation platform 104.

The method 500 may then continue at step 508 in the same manner as described above.

In some embodiments, beacons are not used. For example, the method 500 may include evaluating 514 whether a GPS (global positioning system) coordinate from a GPS receiver of the mobile device 400 is within some threshold distance of a GPS coordinate from a GPS receiver housed in a vehicle 404a-404c or elsewhere in a transportation system. For example, a geo-fencing algorithm executed by the mobile device 400 may determine whether the mobile device 400 is within a region including the vehicle 404a-404c or other region of a transportation system. If the condition of step 514 is found to be met, then processing may continue at step 508.

Fig. 6 illustrates a method 600 for verifying that a passenger has in fact used a mode of transportation. The method 600 may be executed by the application 402 on the mobile device 400, the corresponding passenger platform 116a, 116b, the transportation platform 104, or be divided between two or more of these components.

The method 600 may include evaluating 602 whether an initiation instruction has been received from the passenger through the mobile device 400. For example, the user may open an application and provide an input indicating an intention to initiate a ride using a mode of transportation. In some embodiments, this step is not required and presence of the mobile device 400 alone is used for verification purposes. In embodiments where initiation is required and initiation is not received, then the passenger is not verified to have received a ride and the method 600 ends.

The method 600 may further include repeatedly evaluating 604 whether the mobile device 400 is present in the vehicle, i.e. the vehicle having the beacon that prompted execution of the method 600 as described above with respect to the method 500. The method 600 may further include repeatedly measuring 606 speed of the mobile device 400. This may include simply measuring the GPS coordinates of the mobile device 400 at discrete time points and dividing the distance between the GPS coordinates by the elapsed time between the time points. Alternatively, accelerometers within the mobile device 400 may be used to determine the velocity of the mobile device 400.

Steps 604 and 606 may be repeated periodically (time or distance period) until one of (a) presence of the mobile device 400 in the vehicle is no longer detected 604; and (b) the mobile device 400 senses a beacon indicating an exit of a transportation facility

The method 600 may then evaluate 608 the speed and presence measurements of steps 604 and 606 between an entrance signal, e.g. the signal from the mobile device 400 or beacon that invoked execution of the method 600 as described above with respect to the method 500, and an exit signal, e.g. a last signal indicating presence in the vehicle or a signal transmitted to or received from a beacon at an exit of a transportation facility or vehicle.

If the speed measurements are inconsistent with that of the vehicle or the mode of transportation, then the speed and location measurements may be determined 610 to be inconsistent with a ride taking place. For example, an entrance signal may be detected at a first train station and an exit signal may be detected at a second train station but the speed measurements between these signals may be much slower than the train thereby indicating walking, biking, or driving between the stations. In a like manner, a pedestrian walking alongside a vehicle in slow traffic may result in presence detections at various points along the route traveled by the vehicle, but would have inconsistent speeds throughout the route as the vehicle stops and starts at different times than the pedestrian.

If the speed and presence measurements occurred between the entrance signals and the speed measurements are within some tolerance, then the speed and presence measurements may be determined 610 to be consistent and the ride will be verified 612. For example, a minimum number of presence detections or maximum elapsed time between presence detections may meet the tolerance for presence detections. Speeds at points in time along the journey that are within some tolerance of the vehicle speed at those points in time may be deemed to meet the tolerance for speed.

As is apparent from the method 600, "sensor fusion" is used that provides multiple modes to detect and verify whether a ride has occurred (a) signals emitted from or detected by beacons (b) the speed of the mobile device. In some embodiments, an additional layer of verification may be added: comparison of the GPS location of a vehicle and the GPS location of the mobile device 400. If these remain within a threshold distance of one another between the entrance and exit signals, then a ride may also be verified. In some embodiments, GPS co-location, presence detection, and consistent speed, as described above, are all required to be present at one or more locations or times between the entrance and exit signals before a ride will be verified 612.

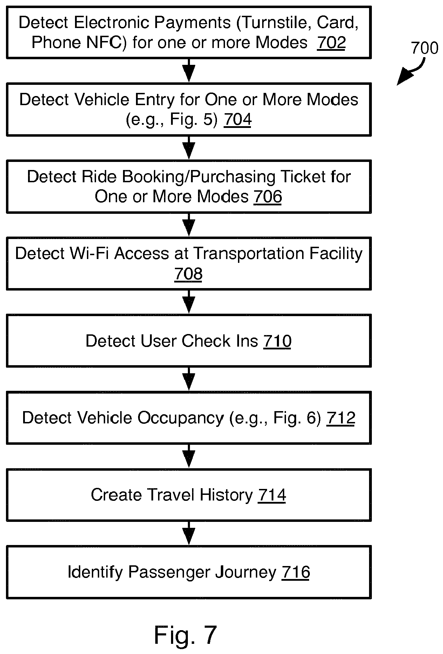

Referring to Fig. 7, rides detected according to any of the foregoing methods or any other approach known in the art may be combined to determine a journey of a passenger including multiple transportation modes using the illustrated method 700. The method 700 is particularly useful where the transportation platform 104 is coupled to some or all of the services 300a-300f that form part of the multimodal transportation system, which enables the gathering of data for implementing the method 700.

The method 700 may be executed for an individual user ("the subject user") over time. At steps 702-710 usage of one or more transportation modalities are detected. Some or all of steps 702-710 may be executed, depending on which transportation modes the subject user employs. Accordingly, the method 700 may be executed each time at least one of steps 702-710 is performed with respect to the subject user.

Step 702 may include detecting electronic payment by the user for a transportation mode. This may include buying a ticket for a transportation modality, detecting an electronic payment card or other device at a detector (e.g., tapping a sensor at a subway or bus station), detecting the subject user's phone using a near field communication (NFC) transmitter or detector of the user's phone.

Step 704 may include detecting entry of the subject user into one or more modes of transportation, such as using beacons according to the method 500 of Fig. 5. Step 704 may further include evaluating

Step 706 may include detecting booking of travel or purchasing of tickets for one or more modes of transportation. For example, an ecommerce cite allowing booking and/or purchase of travel may report the booking or purchase to the transportation platform 104 or other entity executing the method 700.

The method 700 may include detecting 708-712 presence of the subject user in vehicles or structures (subway station, train station, bus stop, airport, etc.) of the transportation system. This may include detecting 708 access of WI-FI by the user's mobile device, detecting 710 check ins at bus stations, train stations, air ports, or other transportation facilities as reported by these entities. This may include detecting 712 vehicle occupancy based on the method 712, detecting presence of the passenger's mobile device in a vehicle, detecting the passenger based on facial recognition, detecting an RFID (radio frequency identification) tag associated with a passenger, or any other identification approach known in the art.

The detections of any of steps 702-712 may be performed by receiving a notification from the user or form the user's mobile device.

The method 700 may include creating 714 a travel history for the subject user. This may include creating records for each detection of steps 702-712. A record of a detection may include a time of detection, a location of the detection, a route of the detection where detection throughout a ride is known (see, e.g. Fig. 6).

The method 700 may further include identifying 716 a passenger journey that corresponds to multiple detections in the travel history. In particular times and locations of detections, travel schedules of transportation modes (busses, trains, subway), actually paths followed by transportation modes (taxis, bikeshare, limo service) may be evaluated.

A journey may be determined by identifying paths that intersect, e.g. within some time and distance threshold, the time and location of detections. In particular, paths or portions of paths of a transportation mode that are within a threshold distance of a location for a detection at the time of the detection.

A collection of such paths identified for the subject user that are contiguous may be inferred to be a journey. Paths may be contiguous if and end of a start path corresponds to the start of another path, e.g. they are each within a threshold distance from the same detection at the time of the same detection. Inner paths after the start path may be contiguous if both start and end points of the path correspond to another path in the journey. A last path is contiguous if its start point corresponds to the end of the start path or an inner path. The last path may include an endpoint that does not correspond to a path of any transportation modality within some threshold time period from detection of arrival of the subject user at the endpoint.

In some embodiments, an actionable journey of the subject user may be augmented with other information such as current weather conditions at one or more points along the actionable journey, traffic conditions at one or more locations and times of the actionable journey, preferences of the subject user, demographic attributes of the subject user, events (sporting, weather, emergencies, etc.) occurring in proximity (e.g. same city or within a predetermined radius) of the actionable journey and during the journey, and other data describing the subject user or the circumstances in which the actionable journey occurred.

Once the journey is known it may be deemed actionable and used for one or more purposes. For example, billing of the user for transportation modes used during the journey may be performed. A collection of actionable journeys may be used to characterize usage of a transportation system for planning purposes. Other analysis and usage of the actionable journey may also be performed.

In the above disclosure, reference has been made to the accompanying drawings, which form a part hereof, and in which is shown by way of illustration specific implementations in which the disclosure may be practiced. It is understood that other implementations may be utilized and structural changes may be made without departing from the scope of the present disclosure. References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Implementations of the systems, devices, and methods disclosed herein may comprise or utilize a special purpose or general-purpose computer including computer hardware, such as, for example, one or more processors and system memory, as discussed herein. Implementations within the scope of the present disclosure may also include physical and other computer-readable media for carrying or storing computer-executable instructions and/or data structures. Such computer-readable media can be any available media that can be accessed by a general purpose or special purpose computer system. Computer-readable media that store computer-executable instructions are computer storage media (devices). Computer-readable media that carry computer-executable instructions are transmission media. Thus, by way of example, and not limitation, implementations of the disclosure can comprise at least two distinctly different kinds of computer-readable media: computer storage media (devices) and transmission media.

Computer storage media (devices) includes RAM, ROM, EEPROM, CDROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

An implementation of the devices, systems, and methods disclosed herein may communicate over a computer network. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links, which can be used to carry desired program code means in the form of computer-executable instructions or data structures and which can be accessed by a general purpose or special purpose computer. Combinations of the above should also be included within the scope of computer-readable media.

Computer-executable instructions comprise, for example, instructions and data which, when executed at a processor, cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, an in-dash vehicle computer, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, various storage devices, and the like. The disclosure may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Further, where appropriate, functions described herein can be performed in one or more of: hardware, software, firmware, digital components, or analog components. For example, one or more application specific integrated circuits (ASICs) can be programmed to carry out one or more of the systems and procedures described herein. Certain terms are used throughout the description and claims to refer to particular system components. As one skilled in the art will appreciate, components may be referred to by different names. This document does not intend to distinguish between components that differ in name, but not function.

It should be noted that the sensor embodiments discussed above may comprise computer hardware, software, firmware, or any combination thereof to perform at least a portion of their functions. For example, a sensor may include computer code configured to be executed in one or more processors, and may include hardware logic/electrical circuitry controlled by the computer code. These example devices are provided herein purposes of illustration, and are not intended to be limiting. Embodiments of the present disclosure may be implemented in further types of devices, as would be known to persons skilled in the relevant art(s). At least some embodiments of the disclosure have been directed to computer program products comprising such logic (e.g., in the form of software) stored on any computer useable medium. Such software, when executed in one or more data processing devices, causes a device to operate as described herein.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on a computer system as a stand-alone software package, on a stand-alone hardware unit, partly on a remote computer spaced some distance from the computer, or entirely on a remote computer or server. In the latter scenario, the remote computer may be connected to the computer through any type of network, including a local area network (LAN) or a wide area network (WAN), or the connection may be made to an external computer (for example, through the Internet using an Internet Service Provider).

The present invention is described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a non-transitory computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

While various embodiments of the present disclosure have been described above, it should be understood that they have been presented by way of example only, and not limitation. It will be apparent to persons skilled in the relevant art that various changes in form and detail can be made therein without departing from the spirit and scope of the disclosure. Thus, the breadth and scope of the present disclosure should not be limited by any of the above-described exemplary embodiments, but should be defined only in accordance with the following claims and their equivalents. The foregoing description has been presented for the purposes of illustration and description. It is not intended to be exhaustive or to limit the disclosure to the precise form disclosed. Many modifications and variations are possible in light of the above teaching. Further, it should be noted that any or all of the aforementioned alternate implementations may be used in any combination desired to form additional hybrid implementations of the disclosure.

## Claims

1. A method of tracking a passenger as the user travels through a multimodal transit system, comprising:
for each mode of multiple modes of the multimodal transit system, detecting, by the each mode, usage of the each mode;
combining the usages of the multiple modes to obtain an actionable journey for the passenger.

2. The method of claim 1, wherein detecting at least one mode of the multiple modes comprises:
sensing, by the at least one mode, co-location of a mobile device of the passenger in a vehicle of the each mode;
tracking, by the at least one mode, movement of the passenger into and out of the vehicle; and
processing payment, by the at least one mode, according to the movement of the passenger;
wherein processing payment comprises:
processing payment from the passenger with a transportation platform providing transportation-related services to all modes of the multimodal transport system; and
crediting at least a portion of the payment from the passenger to an entity corresponding to the at least one mode.

3. The method of claim 1, wherein detecting usage of at least one mode of the multiple modes comprises:
receiving, by the at least one mode, an entrance signal from the mobile device indicating entrance to a mode of transit; and
receiving, by the at least one mode, an exit signal from the mobile device indicating exit from the vehicle;
wherein the entrance signal includes an entrance global positioning system (GPS) coordinate from a GPS receiver of the mobile device, the entrance GPS coordinate indicating a location of the mobile device upon transmitting the entrance signal; and
wherein the exit signal includes an exit global positioning system (GPS) coordinate from the GPS receiver of the mobile device, the exit GPS coordinate indicating a location of the mobile device upon transmitting the exit signal.

4. The method of claim 3, wherein receiving the entrance signal and receiving the exit signal is performed by a beacon mounted within the vehicle of the each mode.

5. The method of claim 1, wherein detecting usage of at least one mode of the multiple modes comprises:
transmitting, by a vehicle, a beacon signal; and
receiving, by the at least one mode, one or more reports of detection of the beacon signal from a mobile device of the passenger.

6. The method of claim 1, wherein detecting usage of at least one mode of the multiple modes comprises:
receiving, by the at least one mode, a travel initiation signal from the mobile device, the travel initiation signal indicating passenger intent to initiate travel with the each mode.

7. The method of claim 1, wherein detecting usage of at least one mode of the multiple modes comprises:
verifying transit of the passenger on the at least one mode according to a speed of a mobile device of the passenger during a transit time between movement of the passenger into a vehicle and movement of the passenger out of the vehicle;
wherein verifying transit of the passenger on the at least one mode according to the speed of the mobile device during the transit time comprises verifying that the speed of the mobile is within a speed range corresponding to the at least one mode.

8. The method of claim 1, wherein detecting usage of at least one mode of the multiple modes comprises detecting co-location of a mobile device of the passenger within a vehicle during a transit time between movement of the passenger into the vehicle and movement of the passenger out of the vehicle by one of:
(a) receiving, by the at least one mode, from one or more sensors located within the vehicle, reports of detection of the presence of the mobile device within the vehicle to the each mode during the transit time;
(b) receiving, by the at least one mode, reports from the mobile device indicating detection of one or more beacons within the vehicle during the transit time; and
(c) receiving, by the at least one mode, GPS (global positioning system) coordinates from the vehicle and the mobile device during the transit time.

9. A computer system comprising one or more processing devices and one or more memory devices storing executable code, the executable code effective to cause the one or more processing devices to:
sense, by a mode computer system corresponding to a transportation mode of a plurality of transportation modes, co-location of a mobile device of a passenger in a vehicle of the transportation mode;
track, by the mode computer system, movement of the passenger into and out of the transportation mode; and
process payment, by the transportation mode, according to the movement of the passenger;
wherein executable code is further effective to cause the one or more processing devices to:
process payment from the passenger using a transportation platform providing transportation-related services to all modes of a multimodal transport system; and
receive crediting of at least a portion of the payment from the passenger to an entity corresponding to the transportation mode.

10. The computer system of claim 9, wherein executable code is further effective to cause the one or more processing devices to sense co-location of the mobile device of the passenger in the vehicle by:
receiving an entrance signal from the mobile device indicating entrance to the vehicle; and
receiving an exit signal from the mobile device indicating exit from the mode of transit;
wherein the entrance signal includes an entrance global positioning system (GPS) coordinate from a GPS receiver of the mobile device, the entrance GPS coordinate indicating a location of the mobile device upon transmitting the entrance signal; and
wherein the exit signal includes an exit global positioning system (GPS) coordinate from the GPS receiver of the mobile device, the exit GPS coordinate indicating a location of the mobile device upon transmitting the exit signal.

11. The computer system of claim 9, wherein executable code is further effective to cause the one or more processing devices to sense co-location of the mobile device of the passenger in the vehicle by receiving one or more reports of detection of a beacon signal from the mobile device, the beacon signal being a signal transmitted from a beacon mounted within the vehicle.

12. The computer system of claim 9, wherein executable code is further effective to cause the one or more processing devices to receive a travel initiation signal from the mobile device, the travel initiation signal indicating passenger intent to initiate travel with the transportation mode.

13. The computer system of claim 9, wherein executable code is further effective to cause the one or more processing devices to verify transit of the passenger on the transportation mode according to a speed of the mobile device during a transit time between movement of the passenger into the vehicle and movement of the passenger out of the vehicle.

14. The computer system of claim 13, wherein executable code is further effective to cause the one or more processing devices to verify transit of the passenger on the transportation mode according to the speed of the mobile device during the transit time by verifying that the speed of the mobile device is within a speed range corresponding to the transportation mode.

15. The computer system of claim 9, wherein executable code is further effective to cause the one or more processing devices to detect co-location of the mobile device within the vehicle during a transit time between movement of the passenger into the vehicle and movement of the passenger out of the vehicle by one of:
(a) receiving from one or more sensors located within the vehicle, reports of detection of the presence of the mobile device within the vehicle during the transit time;
(b) receiving reports from the mobile device indicating detection of one or more beacons within the vehicle during the transit time; and
(c) receiving GPS (global positioning system) coordinates from the vehicle and the mobile device during the transit time.
